(19) Europäisches Patentamt
European Patent Office
Office européen des brevets

(11) **EP 2 518 019 A1**

(12) **EUROPEAN PATENT APPLICATION**
published in accordance with Art. 153(4) EPC

(43) Date of publication:
**31.10.2012 Bulletin 2012/44**

(21) Application number: **10839617.7**

(22) Date of filing: **20.12.2010**

(51) Int Cl.:
*C01G 45/00* (2006.01)    *C01G 51/00* (2006.01)
*C01G 53/00* (2006.01)    *H01M 4/505* (2010.01)

(86) International application number:
**PCT/JP2010/073654**

(87) International publication number:
**WO 2011/078389 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.12.2009 JP 2009294080**

(71) Applicant: **Kabushiki Kaisha Toyota Jidoshokki
Kariya-shi, Aichi 448-8671 (JP)**

(72) Inventors:
• **YASUDA, Naoto
  Kariya-shi
  Aichi 448-8671 (JP)**
• **ISOMURA, Ryota
  Kariya-shi
  Aichi 448-8671 (JP)**
• **MURASE, Hitotoshi
  Kariya-shi
  Aichi 448-8671 (JP)**

(74) Representative: **TBK
Bavariaring 4-6
80336 München (DE)**

(54) **METHOD FOR PRODUCING COMPLEX OXIDE, POSITIVE ELECTRODE ACTIVE MATERIAL FOR LITHIUM-ION SECONDARY BATTERY, AND LITHIUM-ION SECONDARY BATTERY**

(57)    A composite oxide, whose major component is a lithium-manganese-system oxide including Li and tetravalent Mn at least and having a crystal structure that belongs to a layered rock-salt structure, is produced via the following:

a raw-material mixture preparation step of preparing a raw-material mixture by mixing a metallic-compound raw material and a molten-salt raw material with each other, the metallic-compound raw material at least including one or more kinds of metallic compounds being selected from the group consisting of oxides, hydroxides and metallic salts that include one or more kinds of metallic elements in which Mn is essential,

the molten-salt raw material including lithium hydroxide and lithium nitrate, and exhibiting a proportion of the lithium hydroxide with respect to the lithium nitrate (i.e., (Lithium Hydroxide)/(Lithium Nitrate)) that falls in a range of from 1 or more to 10 or less by molar ratio;

a molten reaction step of reacting said raw-material mixture at a melting point of said molten-salt raw material or more by melting it: and

a recovery step of recovering said composite oxide being generated from said raw-material mixture that has undergone the reaction.

*Fig.2*

10 nm

**Description**

<u>TECHNICAL FIELD</u>

The present invention is one which relates to a composite oxide that is employed as a positive-electrode active material for lithium-ion secondary battery, and to a lithium-ion secondary battery that uses that composite oxide.

<u>BACKGROUND ART</u>

Recently, as being accompanied by the developments of portable electronic devices such as cellular phones and notebook-size personal computers, or as being accompanied by electric automobiles being put into practical use, and the like, small-sized, lightweight and high-capacity secondary batteries have been required. At present, as for high-capacity secondary batteries meeting these demands, non-aqueous secondary batteries have been commercialized, non-aqueous secondary batteries in which lithium cobaltate (e.g., $LiCoO_2$) and the carbon-system materials are used as the positive-electrode material and negative-electrode material, respectively. Since such a non-aqueous secondary battery exhibits a high energy density, and since it is possible to intend to make it downsize and lightweight, its employment as a power source has been attracting attention in a wide variety of fields. However, since $LiCoO_2$ is produced with use of Co, one of rare metals, as the raw material, it has been expected that its scarcity as the resource would grow worse from now on. In addition, since Co is expensive, and since its price fluctuates greatly, it has been desired to develop positive-electrode materials that are inexpensive as well as whose supply is stable.

Hence, it has been regarded promising to employ lithium-manganese-oxide-system composite oxides whose constituent elements are inexpensive in terms of the prices as well as which include stably-supplied manganese (Mn) in their essential compositions. Among them, a substance, namely, $Li_2MnO_3$ that includes tetravalent manganese ions alone but does not include any trivalent manganese ions making a cause of the manganese elution upon charging and discharging, has been attracting attention. Although it has been believed so far that it is impossible to charge and discharge $Li_2MnO_3$, it has come to find out that it is possible to charge and discharge it by means of charging it up to 4.8 V, according to recent studies. However, it is needed to further improve $Li_2MnO_3$ with regard to the charging/discharging characteristics.

In order to improve the charging/discharging characteristics, it has been done actively to develop $xLi_2MnO_3 \cdot (1-x)LiMeO_2$ (where 0 < "x" < 1), one of solid solutions between $Li_2MnO_3$ and $LiMeO_2$ (where "Me" is a transition metal element). Note that it is feasible to write and express $Li_2MnO_3$ by a general formula, $Li (Li_{0.33}Mn_{0.67}) O_2$. as well, and that it is said to belong to the same crystal structure as that of $LiMeO_2$. Consequently, there arises a case where $xLi_2MnO_3 \cdot (1-x)LiMeO_2$ is set forth as $Li_{1.33-y}Mn_{0.67-z}Me_{y+z}O_2$ (where 0 < "y" < 0.33, and 0 < "z" < 0.67), too, but even any of the two methods for writing it down specify a composite oxide that possesses the same sort of crystal structure.

For example, Patent Literature No. 1 discloses a production process for solid solution between $LiMO_2$ and $Li_2NO_3$ (where "M" is one or more kinds that are selected from Mn, Ni, Co and Fe, and "N" is one or more kinds that are selected from Mn, Zr and Ti). This solid solution is obtainable as follows: ammonia water is dropped to a mixed solution, in which salts of respective metallic elements that correspond to "M" and "N" are dissolved, until the pH becomes 7; an $Na_2CO_3$ solution is further dropped to it in order to deposit "M"-"N"-system composite carbonates; and the resulting "M"-"N"-system composite carbonates are calcined after mixing them with $LiOH \cdot H_2O$.

Moreover, upon employing a secondary battery including $Li_2MnO_3$ as the positive-electrode active material, it is needed to activate the positive-electrode active material prior to the employment. However, in a case where a particle diameter of $Li_2MnO_3$ is large, since only the particles' superficial layer is activated, it is believed that it is necessary to make the particle diameter of $Li_2MnO_3$ smaller in order to turn $Li_2MnO_3$ to be employed into an active material serving as battery in the total amount virtually. In other words, it is needed to develop convenient processes for synthesizing fine particles as well. For example, in Patent Literature No. 2, a process for synthesizing nano-order oxide particles is disclosed. In Example No. 3 of Patent Literature No. 2, $MnO_2$ and $Li_2O_2$ are added to and are then mixed with a mixture, in which $LiOH \cdot H_2O$ and $LiNO_3$ are mixed in a molar ratio of 1:1, thereby synthesizing lithium manganate (e.g., $LiMn_2O_4$) with a spinel structure, whose manganese has an average oxidation number that is equal to a valence number of 3.5, by turning the mixture into a molten salt after letting the mixture go through a drying step.

<u>Patent Literature</u>

Patent Literature No. 1: Japanese Unexamined Patent Publication (KOKAI) Gazette No. 2008-270,201; and
Patent Literature No. 2: Japanese Unexamined Patent Publication (KOKAI) Gazette No. 2008-105,912

## SUMMARY OF THE INVENTION

### Assignment to be Solved by the Invention

As described above, although a fine-particle-shaped lithium-manganese-oxide-system composite oxide including tetravalent Mn alone has been sought for, it is assumed that a particle diameter of a solid solution between $LiMO_2$ and $Li_2NO_3$ that is obtainable by the process according to Patent Literature No. 1 would be from several micrometers to several dozen micrometers from the calcining temperature and X-ray diffraction pattern shown in Fig 6. That is, it is not possible to obtain nano-order fine particles by the process being set forth in Patent Literature No. 1.

Moreover, in accordance with the production process according to Patent Literature No. 2, although it is possible to produce nano-order fine particles, it has not been possible to make an oxide like $Li_2MnO_3$ that includes tetravalent Mn alone. In Patent Literature No. 2, the following has been stated: the reaction rate is upgraded by adding an oxide or a peroxide to a mixed molten salt of lithium hydroxide and lithium nitrate by means of heightening the oxide ion (i.e., $O^{2-}$) concentration in the molten salt, and so nano particles with much smaller particle diameters become likely to generate. However, the relationships between the reaction conditions and the compositions or structures of the resulting nano particles are not considered at all.

In view of the aforementioned problematic issues, the present invention aims at providing a novel production process for fine-particle-shaped lithium-manganese-oxide-system composite oxide including tetravalent Mn mainly. Moreover, it aims at providing a positive-electrode active material including a composite oxide that is obtainable by means of this novel production process, and a lithium-ion secondary battery using the same.

### Means for Solving the Assignment

A production process for composite oxide according to the present invention is characterized in that:

it is a production process for composite oxide whose major component is a lithium-manganese-system oxide that at least includes: a lithium (Li) element; and a tetravalent manganese (Mn) element, and whose crystal structure belongs to a layered rock-salt structure;
said composite oxide is obtained via the following:

a raw-material mixture preparation step of preparing a raw-material mixture by mixing a metallic-compound raw material and a molten-salt raw material with each other,
the metallic-compound raw material at least including one or more kinds of metallic compounds being selected from the group consisting of oxides, hydroxides and metallic salts that include one or more kinds of metallic elements in which Mn is essential,
the molten-salt raw material including lithium hydroxide and lithium nitrate, and exhibiting a proportion of the lithium hydroxide with respect to the lithium nitrate (i.e., (Lithium Hydroxide)/(Lithium Nitrate)) that falls in a range of from 1 or more to 10 or less by molar ratio;
a molten reaction step of reacting said raw-material mixture at a melting point of said molten-salt raw material or more by melting it: and
a recovery step of recovering said composite oxide being generated from said raw-material mixture that has undergone the reaction.

In the production process for composite oxide according to the present invention, at least the following are used as the raw-material mixture: a "metallic-compound raw material" including at least one kind of metallic compounds that are selected from the group consisting of oxides and hydroxides which comprise at least one kind of metallic elements in which Mn is essential; and a "molten-salt raw material" that includes lithium hydroxide and lithium nitrate. On this occasion, composite oxides that at least includes Li and tetravalent Mn, such as $Li_2MnO_3$, for instance, are obtainable by preparing the molten-salt raw material so that the ratio, namely, (Lithium Hydroxide)/(Lithium Nitrate), becomes from 1 or more to 10 or less by molar ratio and then reacting the raw-material mixture at high temperatures.

Reasons why desirable composite oxides are obtainable by reacting the raw-material mixture, in which the ingredients have been mixed in the aforementioned proportion, at the aforementioned temperatures can be presumed as follows. In order to synthesize a composite oxide that includes Li and tetravalent Mn at least, it is necessary that a reaction activity can be high in a highly oxidizing condition. It is believed that such states can be brought about by means of basic molten salt and reaction temperature. Although molten salt of the oxidizing lithium nitrate exhibits acidity, molten salt of the lithium hydroxide is basic strongly. When a molar ratio, namely, the ratio of (Lithium Hydroxide)/(Lithium Nitrate), is 1 or more, and at the same time when the reaction temperature is high temperatures, the basicity of molten salt in the raw-material mixture becomes higher sufficiently so that the reaction activities become higher. Furthermore, in basic molten salt, hydroxide ions decompose into oxygen ions and water, and the resulting water evaporates from the resultant high-temperature molten salt. As a result, from molten salt of the raw-material mixture, high concentrations of bases as well as dehydrating environments are obtainable, and thereby highly oxidizing conditions, which are suitable for synthesizing desirable composite oxides, can be formed.

In addition, fine-particle-shaped composite oxides are obtainable by means of turning the raw-material mixture into molten salt and then reacting the raw materials in the resulting molten salt. This is because the reactions of the raw materials, which are mixed uniformly in ionic states within the molten salt, proceed at low temperatures and for a short period of time.

Moreover, it is also allowable to carry out a precursor synthesis step, in which an aqueous solution including at least two kinds of metallic elements is alkalified in order to obtain precipitates, before the raw-material mixture preparation step in the production process for composite oxide according to the present invention, and then to employ the resulting precipitates as a part of or the whole of the metallic-compound raw material at the mixture preparation step. Composite oxides, which include, together with Li, one or more kinds of metallic elements and Mn, are obtainable in high purity by using the precipitates as the precursors.

Composite oxides, which are obtainable by means of the production process for composite oxide according to the present invention, can be employed as a positive-electrode active material for lithium-ion secondary battery. That is, it is also possible to grasp the present invention as a positive-electrode active material for lithium-ion secondary battery that is characterized in including a composite oxide that is obtained by means of the production process for composite oxide according to the present invention.

Moreover, a composite oxide being included in a positive-electrode active material for lithium-ion secondary battery according to the present invention is expressed by a compositional formula: $Li_{1.33-y}M^1_{0.67-z}M^2_{y+z}O_2$ (where "$M^1$" is one or more kinds of metallic elements in which tetravalent Mn is essential; "$M^2$" is one or more kinds of metallic elements; $0 \leqq$ "y" $\leqq 0.33$; $0 \leqq$ "Z" $\leqq 0.67$; and Li may even be substituted by hydrogen in a part thereof). Alternatively, a composite oxide being included in a positive-electrode active material for lithium-ion secondary battery according to the present invention is expressed by another compositional formula: $xLi_2M^1O_3 \cdot (1-x)LiM^2O_2$ (where "$M^1$" is one or more kinds of metallic elements in which tetravalent Mn is essential; "$M^2$" is one or more kinds of metallic elements; $0 \leqq$ "x" $\leqq 1$; and Li may even be substituted by hydrogen in a part thereof). Note that it is needless to say that composite oxides, whose compositions have deviated slightly from the aforementioned compositional formulas due to the deficiency in Li, $M^1$, $M^2$ or O that occurs inevitably, are also included herein. In a case where a lithium-manganese-system oxide has a layered rock-salt structure, the average oxidation number of Mn is tetravalent fundamentally; however, due to the presence of Mn whose valance number falls short of being tetravalent that results from the compositions being deviated from the above-described basic compositions, a valance number of from 3.8 to 4 is permissible as for an average oxidation number of Mn in the entirety of an obtainable composite oxide.

Effect of the Invention

In accordance with the present invention, lithium-manganese-oxide-system composite oxides including tetravalent Mn mainly are obtainable in a fine particulate shape, respectively.

BRIEF DESCRIPTION OF THE DRAWING

Fig. 1 illustrates results of an X-ray diffraction measurement on composite oxides that were produced by means of a production process for composite oxide according to the present invention, and those on composite oxides that were produced by means of a conventional method;
Fig. 2 is a diagram substituting for a photograph that shows primary particles of a composite oxide (e.g., $Li_2MnO_3$) that was produced by means a production process for composite oxide according to the present invention;
Fig. 3 is a graph for illustrating charging/discharging characteristics of a lithium-ion secondary battery in which a composite oxide being produced by means a production process for composite oxide according to the present invention was used as the positive-electrode active material; and
Fig. 4 is a graph for illustrating cyclabilities of lithium-ion secondary batteries in which composite oxides being produced by means a production process for composite oxide according to the present invention were used as the positive-electrode active material, respectively.

BEST MODE FOR CARRYING OUT THE INVENTION

Hereinafter, explanations will be made on some of the modes for performing the production process for composite oxide, positive-electrode active material for lithium-ion secondary battery and lithium-ion secondary battery according to the present invention. Note that, unless otherwise specified, ranges of numeric values, namely, "from 'a' to 'b'" being set forth in the present description, involve the lower limit, "a," and the upper limit, "b," in those ranges. And, the other ranges of numeric values are composable by arbitrarily combining not only any two of these upper-limit values and lower-limit values but also any two of those involving the numeric values that are listed in specific examples.

(Composite Oxide)

Hereinafter, the respective steps of a production process for composite oxide according to the present invention will be explained. The production process for composite oxide according to the present invention is a production process for composite oxide that at least includes a lithium (Li) element, and a tetravalent manganese (Mn) element; the production process mainly includes a raw-material mixture preparation step, a molten reaction step, and a recovery step; and it can further include a precursor synthesis step and/or heat-calcination treatment step, and so on, if needed.

The raw-material mixture preparation step is a step in which at least a metallic-compound raw material and a molten-salt raw material are mixed with each other in order to prepare a raw-material mixture. The metallic-compound raw material includes one or more kinds of metallic compounds that are selected from the group consisting of oxides, hydroxides and metallic salts which include one or more kinds of metallic elements in which Mn is essential. The molten-sale raw material includes lithium hydroxide, and lithium nitrate.

As for a raw material for supplying tetravalent Mn, the following are used: one or more kinds of metallic compounds, which are selected from the group consisting of oxides, hydroxides and metallic salts which include one or more metallic elements in which Mn is essential. One of these metallic compounds is essential for the metallic-compound raw material. To be concrete, the following can be given: manganese dioxide ($MnO_2$); dimanganese trioxide ($Mn_2O_3$); manganese monoxide (MnO); trimanganese tetraoxide ($Mn_3O_4$); manganese hydroxide (Mn(OH)2); manganese oxyhydroxide (MnOOH); or metallic compounds in which a part of Mn in these oxides, hydroxides or metallic salts is substituted by Cr, Fe, Co, Ni, Al or Mg, and the like; and so forth. It is allowable to use one kind or two or more kinds of these as an essential metallic compound, respectively. Among them, $MnO_2$ is preferable because not only it can be procured easily but also those with comparatively high purities are likely to be procured.

Here, Mn in the metallic compounds does not necessarily need to be tetravalent, but it is also allowable that it can be Mn with a valence number of 4 or less. This is due to the fact that even divalent or trivalent Mn turns into being tetravalent one because reactions proceed under highly oxidizing conditions. This holds true similarly for the metallic elements that substitute for Mn, too.

In accordance with the production process according to the present invention, it is also possible to produce composite oxides including lithium-manganese-system oxides that include other metallic elements, like composite oxides in which the other metallic elements substitute for tetravalent Mn (or trivalent Mn depending on cases). If such is the case, it is allowable to further employ one or more kinds of second metallic compounds that are selected from the group consisting of oxides, hydroxides and metallic salts that include one or more kinds of metallic elements other than Mn in addition to one or more kinds of the aforementioned metallic compounds that are selected from the group consisting of oxides, hydroxides and metallic salts which include one or more kinds of metallic elements in which Mn is essential. As for specific examples of the second metallic compounds, the following can be given: cobalt monoxide (CoO); cobalt nitrate ($Co(NO_3)_2 \cdot 6H_2O$); cobalt hydroxide ($Co(OH)_2$); nickel nitrate ($Ni(NO_3)_2 \cdot 6H_2O$); nickel sulfate ($NiSO_4 \cdot 6H_2O$); aluminum hydroxide ($Al(OH)_3$); aluminum nitrate ($Al(NO_3)_3 \cdot 9H_2O$); copper oxide (CuO); copper nitrate ($Cu(NO_3)_2 \cdot 3H_2O$); calcium hydroxide ($Ca(OH)_2$), and the like. It is permissible to use one kind or two or more kinds of these as the second metallic compounds.

Moreover, it is allowable to preliminarily synthesize in advance one or more kinds of metallic compounds (in other words, essential metallic compounds and/or second metallic compounds), which are selected from the group consisting of oxides, hydroxides and metallic salts that include two or more kinds of metallic elements that can possibly include Mn, as a precursor, or as a raw material including one of the above. That is, before the raw-material mixture preparation step, it is permissible to carry out a precursor synthesis step in which an aqueous solution at least including two kinds of metallic elements is alkalified in order to obtain precipitates. As for an aqueous solution, water-soluble inorganic salts, specifically, nitrates, sulfates or chlorides of the metallic elements, and the like, are dissolved in water. When the resulting aqueous solution is alkalified with alkali metal hydroxide or ammonia water, and so forth, precursors can be generated as precipitates.

Moreover, as raw materials for supplying Li, lithium hydroxide and lithium nitrate are used. Lithium nitrate is adopted because it is a lithium salt with low melting point and it is unlikely to make impurities remain in composite oxides to be produced. Lithium hydroxide is employed in order for adjusting the oxidizing power of the resulting molten salt because the basicity is the highest among lithium salts. Note that, as the lithium hydroxide, it is even allowable to use its hydrates. As for an employable lithium hydroxide, LiOH, $LiOH \cdot H_2O$, and the like, can be given.

At the raw-material mixture preparation step, lithium hydroxide and lithium nitrate are mixed with each other so as to make a proportion of lithium hydroxide with respect to lithium nitrate (i.e., (Lithium Hydroxide)/(Lithium Nitrate)) 1 or more to 10 or less by molar ratio, thereby preparing a molten-salt raw material. As for a mixing proportion, it is desirable that it can be from 1 or more to 7.5 or less by a molar ratio of (Lithium Hydroxide) / (Lithium Nitrate); it is further desirable that it can be from more than 1 to 5.5 or less, or from 1.25 or more to 5 or less, furthermore from 1.5 or more to 3.5 or less. When the mixing ratio is less than 1, it is difficult to produce desired composite oxides that include tetravalent Mn because the oxidizing power of the resulting molten salt is insufficient. Although the greater the content of lithium hydroxide is the more likely it is to obtain desired composite oxides, as such is not desirable because the melting point of the resultant molten salt becomes higher when the mixing ratio exceeds 10.

As described above, the molten-salt raw material brings about desirable oxidizing conditions for generating desired composite oxides due to the setup that lithium hydroxide and lithium nitrate fall in the above-mentioned mixing proportion. Consequently, it is needless to say that it is desirable to avoid employing other compounds that affect the oxidizing condition of the resulting molten salt. For example, lithium peroxide ($Li_2O_2$) is not desirable since it is unstable in air and is a strong oxidizing agent so that it has greatly changed the oxidizing conditions that are to be adjusted by means of the mixing proportions between lithium hydroxide and lithium nitrate.

Moreover, it is also feasible to change the particle diameters of obtainable composite oxides by changing a mixing proportion in the molten-salt raw material. For example, in molten-salt reactions at identical temperatures, the larger the molar ratio of (Lithium Hydroxide)/(Lithium Nitrate) becomes the more feasible it is to make the particle diameters of particles to be synthesized smaller. Moreover, the higher an oxygen concentration is set in the molten reaction step the more possible it is to make the particle diameters of particles to be synthesized smaller.

Moreover, it is allowable that a blending proportion of the above-mentioned metallic-compound raw material and molten-salt raw material can suitably be selected in compliance with proportions of Li and Mn that are included in composite oxides to be produced, as well as those of the other metallic elements, if needed. When defining it daringly, it is permissible to set a proportion of metallic element being included in the metallic-compound raw material with respect to lithium metal being included in the molten-salt raw material (i.e., (Metallic Element in Metallic-compound Raw Material) /(Li in Molten-salt Raw Material)) at from 0.01 or more to 0.2 or less by molar ratio. Since the amounts of generating composite oxides become less with respect to the employed amounts of the molten-salt raw material when it is less than 0.01, as such is not desirable in the aspect of production efficiency. Moreover, since the amount of molten salt for dispersing the metallic-compound raw material has run short and so the resulting composite oxides might possibly agglomerate or undergo granular growths within the molten salt when it exceeds 0.2, as such is not desirable. A further desirable proportion of the (Metallic Element in Metallic-compound Raw Material)/(Li in Molten-salt Raw Material) can be from 0.01 to 0.1, or from 0.013 to 0.05, furthermore from 0.015 to 0.045, by molar ratio.

Moreover, it is also feasible to define the above-mentioned blending proportion of the molten-salt raw material by the theoretical compositions of lithium being included in targeted composite oxides with respect to lithium being included in the molten-salt raw material (i.e., (Li in Composite Oxide) / (Li in Molten-salt Raw Material)). The molten-salt raw material not only accomplishes a role of a supply source for lithium but also accomplishes a role of adjusting the oxidizing condition of molten salt. Consequently, it is desirable that the molten-salt raw material can include lithium in an amount that exceeds the theoretical compositions of lithium being included in composite oxides to be produced. Although it is allowable that the ratio, (Li in Composite Oxide)/(Li in Molten-salt Raw Material), can be less than 1 by molar ratio, it is preferable to be from 0.01 to 0.4, and it is further preferable to be from 0.013 to 0.1, or from 0.02 to 0.09. Since the amounts of generating composite oxides become less with respect to the employed amounts of the molten-salt raw material when it is less than 0.01, as such is not desirable in the aspect of production efficiency. Moreover, since the amount of molten salt for dispersing the metallic-compound raw material has run short and so the resulting composite oxides might possibly agglomerate or undergo granular growths within the molten salt when it exceeds 0.4, as such is not desirable.

It is allowable to carry out a drying step of drying the raw-material mixture after the raw-material mixture preparation step, but before the molten reaction step. When using a vacuum drier for the drying, it is permissible to vacuum dry the raw-material mixture at 80-150°C for 2-24 hours.

The molten reaction step is a step in which the raw-material mixture is melted to react it. The reaction temperature is a temperature of the raw-material mixture at the molten reaction step; although it can be a melting point or more of the molten-salt raw material, it is difficult to produce desired composite oxides including tetravalent Mn because the reaction activity of molten salt is insufficient at less than 330°C. Moreover, when the reaction temperature is 330 °C or more, the crystal structures of obtainable composite oxides stabilize. A preferable lower limit of the reaction temperature can be 340°C or more, furthermore 345°C or more. Although an upper limit of the reaction temperature depends on the types of the raw-material mixture, it is desirable to be 700°C or less, furthermore 500°C or less. Note however that, because lithium nitrate decomposes violently when it becomes high temperatures (e.g., about 600°C), it is possible to carry out the synthesis of composite oxides under relatively stabilized conditions when being 500°C or less. When employing manganese dioxide as a metallic compound that supplies Mn, it is desirable that the reaction temperature can be from 330°C to 470°C, furthermore from 340°C to 450°C. Since the decomposition reaction of molten salt occurs when the reaction temperature is too high, as such is not desirable. When the raw-material mixture is retained at such a temperature for 30 minutes or more, further desirably for from 1 to 6 hours, it reacts sufficiently. Moreover, when the molten reaction step is carried out in an oxygen-containing atmosphere, for example, in air or in a gaseous atmosphere including oxygen gas and/or ozone gas, composite oxides including tetravalent Mn are likely to be obtained in a single phase. When being an atmosphere containing oxygen gas, it is allowable to set an oxygen-gas concentration at from 20 to 100% by volume, furthermore from 50 to 100% by volume.

The recovery step is a step of recovering a composite oxide that is generated from the post-reaction raw-material mixture (or molten salt). There are not any limitations on the recovery method especially; however, since composite oxides, which have been generated at the molten reaction step, are insoluble in water, the resulting molten salt is cooled sufficiently to solidify in order to turn them into solids, then the resultant solids are dissolved in water, and thereby the composite oxides are obtainable as insoluble substances. Thus, it is allowable to take out the resulting composite oxides by drying filtered substances that have been obtained by filtering the resultant aqueous solution.

Moreover, there are not any limitations on a cooling rate for the raw-material mixture after the molten reaction step especially; however, when being defined concretely, it is desirable to carry out cooling at a rate of from 0.5 to 5 °C /minute, furthermore from 1 to 3 °C /minute, until a temperature of the post-molten-reaction-step raw-material mixture becomes a temperature at which molten salt solidifies, namely, 200°C or less, when defining it concretely. Note that, in later-described examples, the cooling rate was set so that molten salt became 200°C in 2 hours approximately from the beginning of the cooling.

Moreover, after the recovery step, it is also allowable to carry out a proton substitution step in which hydrogen (H) substitutes for a part of Li in the resulting composite oxides. In the proton substitution step, a part of Li in the resultant post-recovery-step composite oxides can be replaced readily by H by means of contacting the composite oxides with a solvent such as a diluted acid.

Moreover, after the recovery step (or the proton substitution step), it is also allowable to carry out a heat-calcination treatment step in which the resulting composite oxides are heated in an oxygen-containing atmosphere. It is permissible to carry out the heat-calcination step in an oxygen-containing atmosphere, for example, in air or in a gaseous atmosphere including oxygen gas and/or ozone gas. When being an atmosphere containing oxygen gas, it is allowable to set an oxygen-gas concentration at from 20 to 100% by volume, furthermore from 50 to 100% by volume. It is desirable that a calcination temperature can be 300°C or more, furthermore from 350 to 500°C, and it is desirable to retain the resultant composite oxides at such a temperature for 20 minutes or more, furthermore for 0.5 to 2 hours.

A composite oxide, which has been obtained by means of the production process according to the present invention that has been described in detail so far, has characteristics that are different from those of composite oxides that have been produced by the other production processes but possess the same composition as that of the above. Hereinafter, those characteristics will be listed.

It is allowable that the composite oxide can exhibit a crystal structure that belongs to a layered rock-salt structure. It is possible to ascertain being layered rock-salt structure by means of X-ray diffraction (or XRD), electron-beam diffraction, and the like. Moreover, a layered structure is observable by high-resolution image using high-resolution transmission electron microscope (or TEM).

It is allowable that the composite oxide can include single-crystalline primary particles. It is possible to ascertain that the primary particles are virtually single crystalline by means of high-resolution image by TEM. Moreover, it is permissible that the particle diameters of the primary particles in the composite oxide can be 500 nm or less, furthermore from 10 to 200 nm. Although detailed descriptions will be made later on a measurement of the particle diameters, it is feasible to measure them with use of high-resolution image by TEM. It is also possible to define the primary particle diameters from XRD. It is allowable that the composite oxide can include single-crystalline primary particles whose c-axis-direction particle diameters being calculated by means of the Scherrer equation are 100 nm or less. Preferable c-axis-direction particle diameters of the primary particles in the composite oxide can be from 5 to 50 nm, furthermore from 5.5 to 20 nm, according to the Scherrer equation. Note that a half-value width is taken as a value that is measured at the position of an intensity that is calculated by $I_{max}/2$ when the maximum intensity of (001) in $Li_2MnO_3$, which can be seen in the vicinity of 18.5-degree diffractionangle (2 $\theta$, CuK$\alpha$ rayused), is labeled the "$I_{max}$." As described earlier, the smaller the primary particle diameters are the more likely it is that they can be activated; however, their crystal structures become likely to collapse due to charging and discharging so that the resulting battery characteristics might possibly decline when being too small, and accordingly as such is not preferable.

When expressing obtainable composite oxides by a compositional formula, the compositional formula can be $Li_{1.33-y}M^1_{0.67-z}M^2_{y+z}O_2$ (where "M$^1$" is one or more kinds of metallic elements in which tetravalent Mn is essential; "M$^2$" is one or more kinds of metallic elements; 0 ≦ "y" ≦ 0.33; 0 ≦ "Z" ≦ 0. 67; and Li may even be substituted by hydrogen in a part thereof). Alternatively, the compositional formula can be $xLi_2M^1O_3 \cdot (1-x)LiM^2O_2$ (where "M$^1$" is one or more kinds of metallic elements in which tetravalent Mn is essential; "M$^2$" is one or more kinds of metallic elements; 0 ≦ "x" ≦ 1; and Li may even be substituted by hydrogen in a part thereof). The composite oxides being expressed by these compositional formulas are different in the method of expression, but any of them are composite oxides with an identical crystal structure one another; and it is allowable that they can be a lithium-manganese-system oxide whose crystal structure belongs to a layered rock-salt structure, especially, an $\alpha$-NaFeO$_2$ type layered rock-salt structure, respectively. Note that it is even permissible that Li can be substituted by H in an amount of 60% or less, furthermore 45% or less, by atomic ratio. It is preferable that "x" can be 0.3 $\leqq$ "x" $\leqq$ 1, furthermore 0.5 $\leqq$ "x" $\leqq$ 1. Moreover, although it is preferable that "M$^1$" can be tetravalent Mn in most part thereof, it is also allowable that it can be substituted by the other elements in an amount of less than 50%, furthermore less than 80%. As for metallic elements other than Mn that constitute "M$^1$" and "M$^2$," it is preferable that they can be transition metals from a viewpoint of chargeable/rechargeable capacity in a case where they are made into electrode materials; to be concrete, it is preferable that they can be selected from the group consisting of Ni, Al, Co, Fe, Mg, and Ti. Note that, in a case where Ni is included in "M$^1$" and "M$^2$," the generation of by-products (e.g., NiO) whose removal is difficult can be suppressed by adopting the production process that uses a precursor as earlier described.

(Lithium-ion Secondary Battery)

It is possible to use the composite oxides, which have been obtained by means of the production process according to the present invention, as a positive-electrode active material for lithium-ion secondary battery, respectively. Hereinafter, explanations will be made on a lithium-ion secondary battery using a positive-electrode active material for lithium-ion secondary battery that includes one of the aforementioned composite oxides. This lithium-ion secondary battery is mainly equipped with a positive electrode, a negative electrode, and a non-aqueous electrolyte. Moreover, in the same manner as common lithium-ion secondary batteries, it is further equipped with a separator, which is held between the positive electrode and the negative electrode.

The positive electrode includes a positive-electrode active material into which lithium ions can be inserted and from which they can be extracted, and a binding agent that binds the positive-electrode active material together. It is also allowable that it can further include a conductive additive. The positive-electrode active material includes one of the aforementioned composite oxides independently. Alternatively, it is even permissible that the positive-electrode active material can further include one or more kinds of the other positive-electrode active materials being selected from the group consisting of LiCoO$_2$, LiNi$_{1/3}$Co$_{1/3}$Mn$_{1/3}$O$_2$, LiMn$_2$O$_4$, S, and the like, which have been used for common lithium-ion secondary batteries, along with one of the aforementioned composite oxides.

Moreover, there are not any limitations especially on the binding agent and conductive additive, and so they can be those which are employable in common lithium-ion secondary batteries. The conductive additive is one for securing the electric conductivity of electrode, and it is possible to use for the conductive additive one kind of carbon-substance powders, such as carbon blacks, acetylene blacks and graphite, for instance; or those in which two or more kinds of them have been mixed with each other. The binding agent is one which accomplishes a role of fastening and holding up the positive-electrode active material and the conductive additive together, and it is possible to use for the binding agent the following: fluorine-containing resins, such as polyvinylidene fluoride, polytetrafluoroethylene and fluororubbers; or thermoplastic resins, such as polypropylene and polyethylene, and the like, for instance.

The negative electrode to be faced to the positive electrode can be formed by making metallic lithium, namely, a negative-electrode active material, into a sheet shape. Alternatively, it can be formed by press bonding the one, which has been made into a sheet shape, onto a current-collector net, such as nickel or stainless steel. Instead of metallic lithium, it is possible to use lithium alloys or lithium compounds as well. Moreover, in the same manner as the positive electrode, it is also allowable to employ a negative electrode comprising a negative-electrode active material, which can absorb lithium ions and from which they can be desorbed, and a binding agent. As for a negative-electrode active material, it is possible to use the following: natural graphite; artificial graphite; organic-compound calcined bodies, such as phenolic resins; and powders of carbonaceous substances, such as cokes, for instance. As for a binding agent, it is possible to use fluorine-containing resins, thermoplastic resins, and the like, in the same manner as the positive electrode.

It is common that the positive electrode and negative electrode are made by adhering an active-material layer, which is made by binding at least a positive-electrode active material or negative-electrode active material together with a binding agent, onto a current collector. Consequently, the positive electrode and negative electrode can be formed as follows: a composition for forming electrode mixture-material layer, which includes an active material and a binding agent as well as a conductive additive, if needed, is prepared; the resulting composition is applied onto the surface of a current collector after an appropriate solvent has been further added to the resultant composition to make it pasty, and is then dried thereon; and the composition is compressed in order to enhance the resulting electrode density, if needed.

For the current collector, it is possible to use meshes being made of metal, or metallic foils. As for a current collector, porous or nonporous electrically conductive substrates can be given, porous or nonporous electrically conductive substrates which comprise: metallic materials, such as stainless steels, titanium, nickel, aluminum and copper; or electrically conductive resins. As for a porous electrically conductive substrate, the following can be given: meshed bodies, netted bodies, punched sheets, lathed bodies, porous bodies, foamed bodies, formed bodies of fibrous assemblies like nonwoven fabrics, and the like, for instance. As for a nonporous electrically conductive substrate, the following can be given: foils, sheets, films, and so forth, for instance. As for an applying method of the composition for forming electrode mixture-material layer, it is allowable to use a method, such as doctor blade or bar coater, which has been heretofore known publicly.

As for a solvent for viscosity adjustment, the following are employable: N-methyl-2-pyrrolidone (or NMP), methanol, methyl isobutyl ketone (or MIBK), and the like.

As for an electrolyte, it is possible to use organic-solvent-system electrolytic solutions, in which an electrolyte has been dissolved in an organic solvent, or polymer electrolytes, in which an electrolytic solution has been retained in a polymer, and the like. Although the organic solvent, which is included in that electrolytic solution or polymer electrolyte, is not at all one which is limited especially, it is preferable that it can include a chain ester (or a linear ester) from the perspective of load characteristic. As for such a chain ester, the following organic solvents can be given: chain-like carbonates, which are represented by dimethyl carbonate, diethyl carbonate and ethyl methyl carbonate; ethyl acetate; and methyl propionate, for instance. It is also allowable to use one of these chain or linear esters independently, or to mix two or more kinds of them to use. In particular, in order for the improvement in low-temperature characteristic, it is preferable that one of the aforementioned chain esters can account for 50% by volume or more in the entire organic solvent; especially, it is preferable that the one of the chain esters can account for 65% by volume or more in the entire organic solvent.

However, as for an organic solvent, rather than constituting it of one of the aforementioned chain esters alone, it is preferable to mix an ester whose permittivity is high (e.g., whose permittivity is 30 or more) with one of the aforementioned chain esters to use in order to intend the upgrade in discharged capacity. As for a specific example of such an ester, the following can be given: cyclic carbonates, which are represented by ethylene carbonate, propylene carbonate, butylene carbonate and vinylene carbonate; $\gamma$-butyrolactone; or ethylene glycol sulfite, and the like, for instance. In particular, cyclically-structured esters, such as ethylene carbonate and propylene carbonate, are preferable. It is preferable that such an ester whose permittivity is high can be included in an amount of 10% by volume or more in the entire organic solvent, especially 20% by volume or more therein, from the perspective of discharged capacity. Moreover, from the perspective of load characteristic, 40% by volume or less is more preferable, and 30% by volume or less is much more preferable.

As for an electrolyte to be dissolved in the organic solvent, one of the following can be used independently, or two or more kinds of them can be mixed to use: $LiClO_4$, $LiPF_6$, $LiBF_4$, $LiAsF_6$, $LiSbF_6$, $LiCF_3SO_3$, $LiC_4F_9SO_3$, $LiCF_3CO_2$, $Li_2C_2F_4(SO_3)_2$, $LiN(CF_3SO_2)_2$, $LiC(CF_3SO_2)_3$, or $LiC_nF_{2n+1}SO_3$ (where "n" $\geqq$ 2), and the like, for instance. Among them, $LiPF_6$ or $LiC_4F_9SO_3$, and so forth, from which favorable charging/discharging characteristics are obtainable, can be used preferably.

Although a concentration of the electrolyte in the electrolytic solution is not at all one which is limited especially, it can preferably be from 0.3 to 1.7 mol/dm$^3$, especially from 0.4 to 1.5 mol/dm$^3$ approximately.

Moreover, in order to upgrade the safety or storage characteristic of battery, it is also allowable to make a nonaqueous electrolytic solution contain an aromatic compound. As for an aromatic compound, benzenes having an alkyl group, such as cyclohexylbenzene and t-butylbenzne, biphenyls, or fluorobenzenes can be used preferably.

As for a separator, it is allowable to use those which have sufficient strength, and besides which can retain electrolytic solutions in a large amount. From such a viewpoint, it is possible to use the following, which have a thickness of from 5 to 50 $\mu$m, preferably: micro-porous films which are made of polypropylene, polyethylene or polyolefin, such as copolymers of propylene and ethylene; or nonwoven fabrics, and the like. In particular, in a case where such a thin separator as having from 5 to 20 $\mu$m in thickness is used, the characteristics of battery are likely to degrade during charging/discharging cycles or storage at high temperatures, and the safety declines as well. However, since a lithium-ion secondary battery, in which one of the above-mentioned composite oxides is used as the positive-electrode active material, is excellent in the stability and safety, it is possible to make the resulting batteries function stably even when such a thin separator is used.

A configuration of lithium-ion secondary batteries, which are constituted by means of the constituent elements as above, can be made into various sorts of those such as cylindrical types, laminated types and coin types. Even in a case where any one of the configurations is adopted, the separators are interposed between the positive electrodes and the negative electrodes to make electrode assemblies. And, these electrode assemblies are sealed hermetically in a battery case after connecting intervals from the resulting positive-electrode current-collector assemblies and negative-electrode current-collector assemblies up to the positive-electrode terminals and negative-electrode terminals, which lead to the outside, with leads for collecting electricity, and the like, and then impregnating these electrode assemblies with the aforementioned electrolytic solution, and thereby a lithium-ion secondary battery completes.

In a case where lithium-ion secondary batteries are made use of, the positive-electrode active material is activated by carrying out charging in the first place. However, in a case where one of the above-described composite oxides is used as a positive-electrode active material, lithium ions are released at the time of first-time charging, and simultaneously therewith oxygen generates. Consequently, it is desirable to carry out charging before sealing the battery case hermetically.

A lithium-ion secondary battery, in which one of the composite oxides being obtained by means of the production process according to the present invention as explained above is used, can be utilized suitably in the field of automobile in addition to the field of communication device or information-related device such as cellular phones and personal computers. For example, when vehicles have this lithium-ion secondary battery on-board, it is possible to employ the lithium-ion secondary battery as an electric power source for electric automobile.

So far, some of the embodiment modes of the production process for composite oxide, positive-electrode active material for lithium-ion secondary battery and lithium-ion secondary battery according to the present invention have been explained. However, the present invention is not one which is limited to the aforementioned embodiment modes. It is possible to execute the present invention in various modes, to which changes or modifications that one of ordinary skill in the art can carry out are made, within a range not departing from the gist.

EXAMPLES

Hereinafter, the present invention will be explained in detail while giving specific examples of the production process for composite oxide, positive-electrode active material for lithium-ion secondary battery and lithium-ion secondary battery according to the present invention.

(Example No. 1: Synthesis of $Li_2MnO_3$)

0.15-mol (i.e., 6.3-gram) lithium hydroxide monohydrate, $LiOH \cdot H_2O$ was mixed with 0.10-mol (i.e., 6.9-gram) lithium nitrate, $LiNO_3$, to prepare a molten-salt raw material. To this, 0.010-mol (i.e., 0.87-gram) manganese dioxide, $MnO_2$, was added as a metallic-compound raw material, thereby preparing a raw-material mixture.

In the raw-material mixture, the ratio, namely, (Transition Metal in Metallic-compound Raw Material) / (Lithium Metal in Molten-salt Raw Material), was 0.01 mol/0.25 mol = 0.04. Moreover, since the targeted product was $Li_2MnO_3$, the other ratio, namely, (Li in Targeted Product) / (Li in Molten-salt Raw Material), was 0.02mol/0.25 mol = 0.08, assuming that all of Mn in the manganese dioxide was supplied to $Li_2MnO_3$.

The raw-material mixture was put in a crucible being made of mullite, and was then vacuum dried by a vacuum drier at 120°C for 12 hours. Thereafter, the drier was returned back to the atmospheric pressure; the crucible, in which the raw-material mixture was held, was taken out and was then transferred immediately to an electric furnace, which had been heated to 350°C, and was further heated at 350°C for 2 hours in an oxygen atmosphere in which an oxygen concentration was 100%. On this occasion, the raw-material mixture was fused to turn into molten salt, and thereby a black-colored product deposited.

Next, the crucible, in which the molten salt was held, was taken out from the electric furnace, and was then cooled at room temperature. After the molten salt was cooled fully to solidify, the solidified molten salt was dissolved in water by immersing the molten salt as being held in the crucible into 200-mL ion-exchanged water and then stirring them therein. Since the black-colored product was insoluble in water, the water turned into a black-colored suspension liquid. When filtering the black-colored suspension liquid, a transparent filtrate was obtained, and a black-colored, solid filtered substance was obtained on the filter paper. The obtained filtered substance was further filtered while washing it fully with use of ion-exchanged water. After vacuum drying the post-washing black-colored solid at 120°C for 6 hours, it was pulverized using a mortar and pestle.

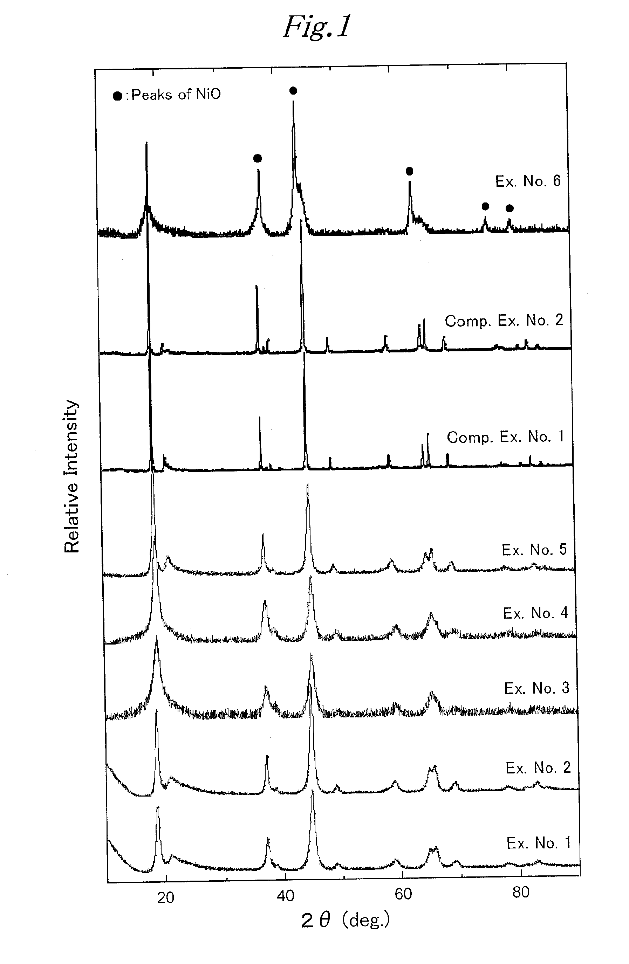

An X-ray diffraction (or XRD) measurement, in which the CuK$\alpha$ ray was used, was carried out for the obtained black-colored powder. The measurement result is shown in Fig. 1. According to the XRD measurement, it was understood that the obtained compound had an $\alpha$-NaFeO$_2$ type layered rock-salt structure. Moreover, it was ascertained that a composition, which was obtained from an emission spectroscopic (e.g., ICP) analysis and an average valency analysis of Mn by means of oxidation-reduction titration, was $Li_2MnO_3$.

Note that the evaluation on the valency of Mn was carried out as follows. A sample was taken in an amount of 0.05 g in an Erlenmeyer flask; a 1% sodium oxalate solution was added thereto in an amount of 40 mL accurately; $H_2SO_4$ was further added thereto in an amount of 50 mL; and then the sample was dissolved within a 90°C water bath in a nitrogen-gasatmosphere. To the resulting mixture solution, 0.1N potassium permanganate was dropped to titrate it, and the titration was carried out until an end point at which the mixture solution changed the color to a faint rouge-like color (i.e., a titer, "V1" ). Meanwhile, another 1% sodium oxalate solution was taken in an amount of 20 mL accurately in another flask, and another 0.1N potassium permanganate was dropped to titrate the resultant mixture solution in the same manner as aforementioned until the end point (i.e., another titer, "V2"). According to the following equation, an amount of oxalic acid, which was consumed when Mn with higher number of valence was reduced to $Mn^{2+}$, was calculated as an oxygen amount (or active-oxygen amount) from the "V1" and "V2".

$$(Active\text{-}oxygen\ Amount)\ (\%) = [\{(2 \times "V2" - "V1") \times 0.00080\}/(Amount\ of\ Sample)] \times 100$$

And, an averaged valency of Mn was calculated from an Mn amount in the sample (e.g., a measured value by ICP analysis) and the resulting active-oxygen amount.

(Example No. 2: Synthesis of $Li_2MnO_3$)

Other than setting the molar ratio between lithium hydroxide monohydrate ($LiOH \cdot H_2O$) and lithium nitrate ($NiNO_3$) at 5 : 1 and setting the temperature and time in the molten-salt reaction step at 500°C for 3 hours, lithium manganate was synthesized in the same manner as Example No. 1. To be concrete, 0.5-mol (i.e., 21.0-gram) lithium hydroxide monohydrate, $LiOH \cdot H_2O$, was mixed with 0.10-mol (i.e., 6. 9-gram) lithium nitrate, $LiNO_3$. To this, 0.010-mol (i.e., 0.87-gram) manganese dioxide, $MnO_2$, was added, thereby preparing a raw-material mixture.

In the raw-material mixture, the ratio, namely, (Transition Element in Metallic-compound Raw Material) / (Lithium Metal in Molten-salt Raw Material), was 0.01 mol/0.60 mol = 0.017. Moreover, since the targeted product was $Li_2MnO_3$, the other ratio, namely, (Li in Targeted Product)/(LiinMolten-salt Raw Material), was 0.02 mol/0. 60 mol = 0.03, assuming that all of Mn in the manganese dioxide was supplied to $LiMnO_3$.

The XRD measurement was carried out for the obtained black-colored powder. The measurement result is shown in Fig. 1. According to the XRD measurement, the ICP analysis and the average valency analysis of Mn, it was understood that the obtained lithium manganate was $Li_2MnO_3$ that had an $\alpha$-$NaFeO_2$ type layered rock-salt structure.

(Example No. 3: Synthesis of $0.5(Li_2MnO_3)\cdot 0.5(LiCoO_2)$)

A mixed phase of $Li_2MnO_3$ and $LiCoO_2$ was synthesized by means of the following procedure.

0.20-mol (i.e., 8.4-gram) lithium hydroxide monohydrate, $LiOH \cdot H_2O$, was mixed with 0.10-mol (i.e., 6.9-gram) lithium nitrate, $LiNO_3$, to prepare a molten-salt raw material. To this, a precursor was added as a metallic-compound raw material in an amount of 1.0 g to prepare a raw-material mixture. Hereinafter, a synthesis procedure for the precursor will be explained.

0.5-mol (i.e., 143.5-gram) $Mn(NO_3)_2 \cdot 6H_2O$, and 0.5-mol (i.e., 145.5-gram) $Co(NO_3)_2 \cdot 6H_2O$ were dissolved in 500-mL distilled water to make a metallic-salt-containing aqueous solution. While this aqueous solution was stirred within an ice bath using a stirrer, one in which 50-gram (i.e., 1.2-mol) $LiOH \cdot H_2O$ had been dissolved in 300-mL distilled water was dropped to the aqueous solution over a time period of 2 hours to alkalify it, thereby precipitating deposits of metallic hydroxides. While keeping this solution holding the deposit therein at 5°C, aging was carried out for one day in an oxygen atmosphere. A precursor with Mn:Co = 0.5:0.5 was obtained by means of filtering the obtained deposits and then washing them with use of distilled water.

Note that it was ascertained by means of the X-ray diffraction measurement that the obtained precursor comprised a mixed phase between $Mn_3O_4$ and $Co_3O_4$. Consequently, a content of transition metal elements was 0.0128 mol in 1 gram of this precursor.

In the raw-material mixture, the ratio, namely, (Transition Element in Metallic-compound Raw Material) / (Lithium Metal in Molten-salt Raw Material), was 0.0128 mol/0.3 mol = 0.0427. Moreover, since the targeted product was 0.5 $(Li_2MnO_3)\cdot 0.5(LiCoO_2)$, the other ratio, namely, (Li in Targeted Product)/(Li in Molten-salt Raw Material), was 0.0192 mol/0.3 mol = 0.064, assuming that all of Mn in the manganese dioxide was supplied to $LiMnO_4$.

The raw-material mixture was put in a crucible being made of mullite, and was then vacuum dried at 120°C for 24 hours within a vacuum drier. Thereafter, the drier was returned back to the atmospheric pressure; the crucible, in which the raw-material mixture was held, was taken out and was then transferred immediately to an electric furnace, which had been heated to 350°C, and was further heated at 350°C for 2 hours in an oxygen atmosphere. On this occasion, the raw-material mixture was fused to turn into molten salt, and thereby a black-colored product deposited.

Next, the crucible, in which the molten salt was held, was taken out from the electric furnace, and was then cooled at room temperature. After the molten salt was cooled fully to solidify, the solidified molten salt was dissolved in water by immersing the molten salt as being held in the crucible into 200-mL ion-exchanged water and then stirring them therein. Since the black-colored product was insoluble in water, the water turned into a black-colored suspension liquid. When filtering the black-colored suspension liquid, a transparent filtrate was obtained, and a black-colored, solid filtered substance was obtained on the filter paper. The obtained filtered substance was further filtered while washing it fully with use of ion-exchanged water. After vacuum drying the post-washing black-colored solid at 120°C for 6 hours, it was pulverized using a mortar and pestle.

The X-ray diffraction measurement with use of the $CuK\alpha$ ray, was carried out for the obtained black-colored powder. The measurement result is shown in Fig. 1. According to the XRD measurement, it was understood that the obtained compound had an $\alpha$-NaFeO$_2$ type layered rock-salt structure. Moreover, according to the ICP analysis and analysis on an average valency of Mn, it was ascertained that the composition was $0.5Li_2MnO_3 \cdot 0.5LiCoO_2$.

(Example No. 4: Synthesis of $0.5 (Li_2MnO_3) \cdot 0.5 (LiNi_{1/3}Co_{1/3}Mn_{1/3}O_2)$)

A mixed phase of $Li_2MnO_3$ and $LiNi_{1/3}Co_{1/3}Mn_{1/3}O_2$ was synthesized by means of the following procedure.

0.30-mol (i.e., 12.6-gram) lithium hydroxide monohydrate, $LiOH \cdot H_2O$, was mixed with 0.10-mol (i.e., 6.9-gram) lithium nitrate, $LiNO_3$, to prepare a molten-salt raw material. To this, a precursor was added as a metallic-compound raw material in an amount of 1.0 g to prepare a raw-material mixture. Hereinafter, a synthesis procedure for the precursor will be explained.

0.67-mol (i.e., 192.3-gram) $Mn(NO_3)_2 \cdot 6H_2O$, 0.16-mol (i.e., 46.6-gram) $Co(NO_3)_2 \cdot 6H_2O$ and 0.16-mol (i.e., 46.5-gram) $Ni(NO_3)_2 \cdot 6H_2O$ were dissolved in 500-mL distilled water to make a metallic-salt-containing aqueous solution. While this aqueous solution was stirred within an ice bath using a stirrer, one in which 50-gram (i.e., 1.2-mol) LiOH $\cdot$ H$_2$O had been dissolved in 300-mL distilled water was dropped to the aqueous solution over a time period of 2 hours to alkalify it, thereby precipitating deposits of metallic hydroxides. While keeping this solution holding deposits therein at 5°C, aging was carried out for one day in an oxygen atmosphere. A precursor with Mn:Co:Ni = 0.67:0.16:0.16 was obtained by means of filtering the obtained deposits and then washing them with use of distilled water.

Note that it was ascertained by means of the X-ray diffraction measurement that the obtained precursor comprised a mixed phase between $Mn_3O_4$, $Co_3O_4$ and NiO. Consequently, a content of transition metal elements was 0.013 mol in 1 gram of this precursor.

In the raw-material mixture, the ratio, namely, (Transition Element in Metallic-compound Raw Material)/(Lithium Metal in Molten-salt Raw Material), was 0.013 mol/0.40 mol = 0.0325. Moreover, since the targeted product was 0.5 $(Li_2MnO_3) \cdot 0.5(LiNi_{1/3}Co_{1/3}Mn_{1/3}O_2)$, the other ratio, namely, (Li in Targeted Product)/(Li in Molten-salt Raw Material), was 0.0195 mol/0.40 mol =0.04875, assuming that all of Mn in the manganese dioxide was supplied to the targeted product.

The raw-material mixture was put in a crucible being made of mullite, and was then vacuum dried at 120°C for 12 hours within a vacuum drier. Thereafter, the drier was returned back to the atmospheric pressure; the crucible, in which the raw-material mixture was held, was taken out and was then transferred immediately to an electric furnace, which had been heated to 450°C, and was further heated at 450°C for 4 hours in an oxygen atmosphere. On this occasion, the raw-material mixture was fused to turn into molten salt, and thereby a black-colored product deposited.

Next, the crucible, in which the molten salt was held, was taken out from the electric furnace, and was then cooled at room temperature. After the molten salt was cooled fully to solidify, the solidified molten salt was dissolved in water by immersing the molten salt as being held in the crucible into 200-mL ion-exchanged water and then stirring them therein. Since the black-colored product was insoluble in water, the water turned into a black-colored suspension liquid. When filtering the black-colored suspension liquid, a transparent filtrate was obtained, and black-colored, solid filtered substance was obtained on the filter paper. The obtained filtered substance was further filtered while washing it fully with use of ion-exchanged water. After vacuum drying the post-washing black-colored solids at 120°C for 6 hours, it was pulverized using a mortar and pestle. The X-ray diffraction measurement with use of the CuK$\alpha$ ray, was carried out for the obtained black-colored powder. The measurement result is shown in Fig. 1. According to the XRD measurement, it was understood that the obtained compound had an $\alpha$-NaFeO$_2$ type layered rock-salt structure. Moreover, according to the ICP analysis and analysis on an average valency of Mn, it was ascertained that the composition was $0.5(Li_2MnO_3)$ $0.5(LiCo_{1/3}Ni_{1/3}Mn_{1/3}O_2)$.

(Example No. 5: Synthesis of $Li_2MnO_3$)

$Li_2MnO_3$, which had been obtained in Example No. 1, was further calcined by an electric furnace at 400°C for 1 hour in air. The XRD measurement was carried out for the resulting post-calcination $Li_2MnO_3$.

(Comparative Example No. 1: Synthesis of $Li_2MnO_3$)

0.10-mol (i.e., 4.2-gram) lithium hydroxide monohydrate, $LiOH \cdot H_2O$, was mixed with 0.025-mol (i.e., 2.18-gram) manganese dioxide, $MnO_2$, with use of a mortar, thereby preparing a raw-material mixture. The raw-material mixture was put in an alumina crucible, and then tentative calcination was carried out at 500°C for 5 hours. The resulting post-tentative-calcination powder was finally calcined at 800°C for 10 hours after pulverizing it with use of another mortar.

The X-ray diffraction measurement was carried out for the resulting post-final-calcination powder. The measurement result is shown in Fig. 1. According to the XRD measurement, it was understood that the obtained lithium manganate was $Li_2MnO_3$ that had an $\alpha$-NaFeO$_2$ type layered rock-salt structure.

(Comparative Example No. 2: Synthesis of 0.5 ($Li_2MnO_3$)·0.5 ($LiCoO_2$))

Other than adding 0.5-gram LiOH·$H_2O$ to 1.6-gram calcined precursor substance being made by further calcining the precursor, which had been synthesized in Example No. 3, at 400°C for 2 hours in air, and then mixing them one another, 0.5($Li_2MnO_3$)·0.5($LiCoO_2$) was prepared in the same manner as Comparative Example No. 1.

The X-ray diffraction measurement was carried out for the resulting post-final-calcination powder. The measurement result is shown in Fig. 1. According to the XRD measurement, ICP analysis and analysis on an average valency of Mn, it was understood that the obtained compound was 0.5 ($Li_2MnO_3$)·0.5($LiCoO_2$) that had an $\alpha$-$NaFeO_2$ type layered rock-salt structure.

(Example No. 6)

0.3-mol (i.e., 12.6-gram) lithium hydroxide monohydrate, LiOH·$H_2O$, was mixed with 0.10-mol (i.e., 6.9-gram) lithium nitrate, $LiNO_3$, to prepare a molten-salt raw material. To this, 0.0067-mol (i.e., 0.58-gram) $MnO_2$, 0.0016-mol (i.e., 0.12-gram) CoO, and 0.0016-mol (i.e., 0.12-gram) NiO were added, thereby preparing a raw-material mixture. That is, the ratio, namely, (Transition Element in Metallic-compound Raw Material)/(Lithium Metal in Molten-salt Raw Material), was 0.01 mol/0.40 mol = 0.025.

The raw-material mixture was put in a crucible being made of mullite, and then a black-colored oxide was obtained by the same procedure as that of Example No. 4 via the following: drying the raw-material mixture; fusing the raw-material mixture; cooling the resulting molten salt; dissolving the molten salt; separating the resultant product by means of filtration; and washing and drying the product.

The X-ray diffraction measurement was carried out for the thus obtained black-colored powder. The measurement result is shown in Fig. 1. According to the XRD measurement, it was understood that the obtained black-colored powder was had an $\alpha$-$NaFeO_2$ type layered rock-salt structure in which NiO mingled into a manganese • lithium cobaltate mixed phase, $Li_2MnO_3$·$LiCoO_2$.

(Example No. 7: Synthesis of $LiCo_{1/3}Ni_{1/3}Mn_{1/3}O_2$)

0.15-mol (i.e., 6.3-gram) lithium hydroxide monohydrate, LiOH·$H_2O$, was mixed with 0.15-mol (i.e., 10.35-gram) lithium nitrate, $LiNO_3$, to prepare a molten-salt raw material. To this, a precursor was added as a metallic-compound raw material in an amount of 1.0 g to prepare a raw-material mixture. Hereinafter, a synthesis procedure for the precursor will be explained.

0.16-mol (i.e., 45.9-gram) $Mn(NO_3)_2$·$6H_2O$, 0.16-mol (i.e., 46.6-gram) $Co(NO_3)_2$·$6H_2O$, and 0.16-mol (i.e., 46.5-gram) Ni $(NO_3)_2$·$6H_2O$ were dissolved in 500-mL distilled water to make a metallic-salt-containing aqueous solution. While this aqueous solution was stirred within an ice bath using a stirrer, one in which 50-gram (i.e., 1.2-mol) LiOH • $H_2O$ had been dissolved in 300-mL distilled water was dropped to the aqueous solution over a time period of 2 hours to alkalify it, thereby precipitating deposits of metallic hydroxides. While keeping this solution holding deposit therein being held at 5°C, aging was carried out for one day in an oxygen atmosphere. A precursor with Mn:Co:Ni= 0.16:0.16: 0.16 was obtained by means of filtering the obtained deposits and then washing them with use of distilled water.

Note that it was ascertained by means of the X-ray diffraction measurement that the obtained precursor comprised a mixed phase between $Mn_3O_4$, $Co_3O_4$ and NiO. Consequently, a content of transition metal elements was 0.013 mol in 1 gram of this precursor.

In the raw-material mixture, the ratio, namely, (Transition Element in Metallic-compound Raw Material) / (Lithium Metal in Molten-salt Raw Material), was 0.013/0.3 = 0.043. Moreover, since the targeted product was $LiCo_{1/3}Ni_{1/3}Mn_{1/3}O_2$, the other ratio, namely, (Li in Targeted Product) / (Li in Molten-salt Raw Material), was also 0.013/0.3 = 0.043 by molar ratio.

The raw-material mixture was put in a crucible being made of alumina, and was then vacuum dried at 120°C for 12 hours within a vacuum drier. Thereafter, the drier was returned back to the atmospheric pressure; the crucible, in which the raw-material mixture was held, was taken out and was then transferred immediately to an electric furnace, which had been heated to 450°C, and was further heated at 450°C for 2 hours in an oxygen atmosphere. On this occasion, the raw-material mixture was fused to turn into molten salt, and thereby a black-colored product deposited.

Next, the crucible, in which the molten salt was held, was taken out from the electric furnace, and was then cooled at room temperature. After the molten salt was cooled fully to solidify, the solidified molten salt was dissolved in water by immersing the molten salt as being held in the crucible into 200-mL ion-exchanged water and then stirring them therein. Since the black-colored product was insoluble in water, the water turned into a black-colored suspension liquid. When filtering the black-colored suspension liquid, a transparent filtrate was obtained, and a black-colored, solid filtered substance was obtained on the filter paper. The obtained filtered substance was further filtered while washing it fully with use of ion-exchanged water. After vacuum drying the post-washing black-colored solids at 120°C for 6 hours, it was pulverized using a mortar and pestle.

The X-ray diffraction measurement with use of the CuKα ray, was carried out for the obtained black-colored powder. According to the XRD measurement, it was understood that the obtained compound had an α-NaFeO$_2$ type layered rock-salt structure. Moreover, according to the ICP analysis, it was ascertained that the composition was LiCo$_{1/3}$Ni$_{1/3}$Mn$_{1/3}$O$_2$.

(Observation of Primary Particles)

Regarding the composite oxides according to Example Nos. 1 through 7, Comparative Example No. 1 and Comparative Example No. 2, their primary particles were observed using a transmission electron microscope (or TEM) for Example Nos. 1 through 7, whereas using a scanning electron microscope (or SEM) for Comparative Example Nos. 1 and 2. From the resulting TEM images and SEM images, particle diameters of the primary particles were measured. In measuring the particle diameters, a maximum length in a case where one of the particles was held between two parallel lines was measured, and it was measured for the particles in a quantity of 25 pieces to obtain the number average value. The measurement results are given in Table 1. Moreover, c-axis-direction particle diameters, which were calculated from the (001) peak in each of Li$_2$MnO$_3$ at around 18.5 degrees in the XRD patterns, are also given in Table 1.
(TABLE 1)

|  | Particle Dia. (nm) | Half-value Width | c-axis-direction Particle Dia. (nm) Found from Half-value Width |
|---|---|---|---|
| Ex. No. 1 | 40 | 0.689 | 12.3 |
| Ex. No. 2 | 55 | 0.548 | 15.8 |
| Ex. No. 3 | 30 | 1.387 | 5.9 |
| Ex. No. 4 | 35 | 1.015 | 8.2 |
| Ex. No. 5 | 42 | 0.642 | 13.3 |
| Ex. No. 6 | 60 | - | - |
| Ex. No. 7 | 30 | 0.700 | 11.9 |
| Comp. Ex. No. 1 | 12000 | - | - |
| Comp. Ex. No. 2 | 10000 | - | - |

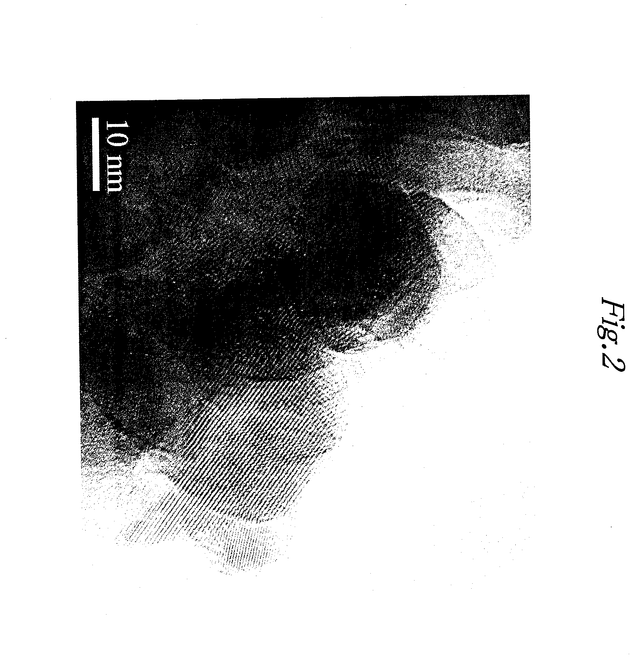

The composite oxides, which had been obtained in Example Nos. 1 through 7, were fine particles whose particle diameters were 100 nm or less. Moreover, a result of observing the composite oxide being obtained in Example No. 1 by means of TEM is shown in Fig. 2. It was understood that any of the particles were a single crystal, respectively. Note that, regarding the other examples as well, it was understood from their TEM images that the primary particles comprised a single crystal, respectively, although not shown in the drawing. On the other hand, the composite oxides, which had been obtained in Comparative Example Nos. 1 and 2, were very large particles whose particle diameters were 10 μm or more.

Moreover, as it is also apparent from Fig. 1, since the composite oxide, which had been obtained in Example No. 6 included NiO as an impurity, it was difficult to measure the particle diameter from the TEM image. However, according to the XRD pattern, it was understood that it comprised fine particles. Therefore, in Example Nos. 1 through 7, it was possible to synthesize compounds not only comprising fine particles but also including composite oxides that had targeted compositions.

Note that, in Example Nos. 1 through 6, the reactions were taken place at 350°C-500°C in order to synthesize the composite oxides. However, even when the reaction temperatures are 330°C approximately or 550°C approximately, it can be presumed that virtually similar composite oxides are obtainable.

(Lithium-ion Secondary Battery)

Li$_2$MnO$_3$, the composite oxide that had been obtained in Example No. 1, was used as a positive-electrode active material, thereby making a lithium-ion secondary battery.

The following were mixed one another: 90-part-by-mass Li$_2$MnO$_3$ serving as a positive-electrode active material; 5-part-by-mass carbon black (or KB) serving as a conductive additive; and 5-part-by-mass polyvinylidene fluoride serving as a binding agent (or binder), and then they were dispersed in N-methyl-2-pyrolidone serving as a solvent, thereby preparing a slurry. Subsequently, this slurry was coated onto an aluminum foil, namely, a current collector, and was then dried thereon. Thereafter, the slurry was press rolled to 60 $\mu$m in thickness, and then the coated aluminum foil was punched out to a size of $\phi$ 11 mm in diameter, thereby obtaining a positive electrode. Moreover, metallic lithium with $\phi$ 14 mm and 200 $\mu$m in thickness was made into a negative electrode to be faced to the positive electrode.

Microporous polyethylene films with 20 $\mu$m in thickness serving as separators were held between the positive electrodes and the negative electrodes to make them into an electrode-assembly battery. This electrode-assembly battery was accommodated in a battery case (e.g., CR2032, a coin cell produced by HOHSEN Co. , Ltd.). Moreover, a non-aqueous electrolyte, in which $LiPF_6$ was dissolved in a concentration of 1.0 mol/L into a mixed solvent in which ethylene carbonate and diethyl carbonate were mixed in a volumetric ratio of 3:7, was injected into the battery case, thereby obtaining a lithium-ion secondary battery.

(Evaluation)

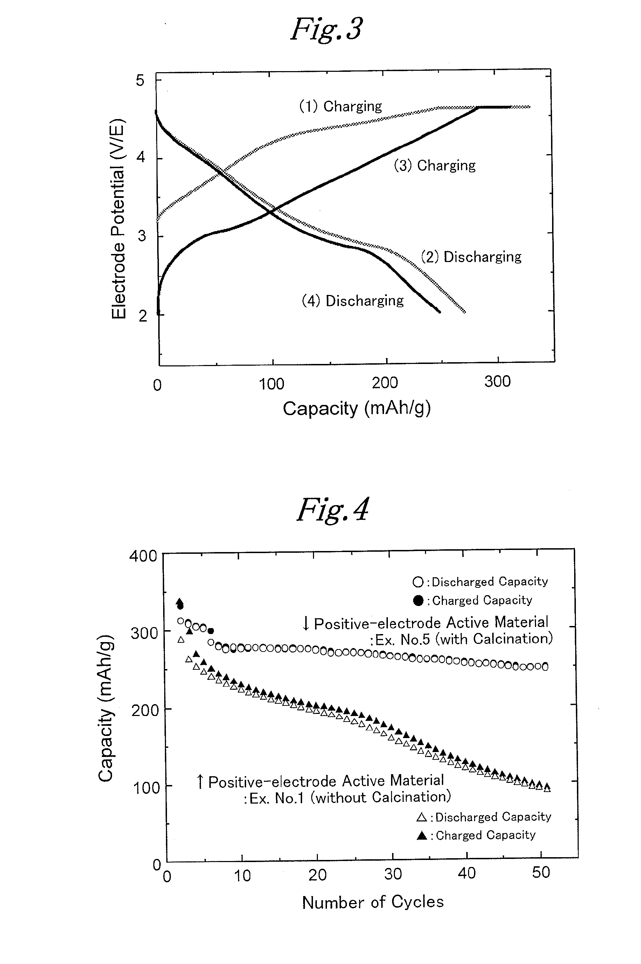

Regarding the aforementioned lithium-ion secondary battery, a charging/discharging test was carried out at room temperature for 50 cycles. In the charging/discharging test, after a CCCV charging (i.e., constant-current and constant-voltage charging) operation was carried out at 0.2C up to 4.6 V to activate the positive-electrode active material, a CC discharging operation was carried out at 0.2C down to 2.0 V. After the second cycle and later on, the following charging and discharging operations were carried out repeatedly: a CCCV charging (i.e., constant-current and constant-voltage charging) operation was carried out at 0.2C up to 4.6 V; and a CC discharging operation was carried out at 0.2C down to 2.0 V. Note that a condition for terminating the constant-voltage charging operation was set at an electric-current value of 0.02C. Results when the charging/discharging test was carried out up to the second cycle are illustrated in Fig. 3. Note that, in Fig. 3, the charging and discharging operations at the first cycle are labeled (1) and (2), respectively; whereas the charging and discharging operations at the second cycle are labeled (3) and (4), respectively.

Moreover, the charged and discharged capacities of the aforementioned lithium-ion secondary battery during each of the cycles are illustrated in Fig. 4. Note that, along with these, Fig. 4 combinedly illustrates results when the same test as above was carried out for a lithium-ion secondary battery in which the composite oxide being obtained in Example No. 5 was used as the positive-electrode active material.

The lithium-ion secondary battery in which the composite oxide being obtained in Example No. 5 was used as the positive-electrode active material could retain the initial capacities even after 50 cycles of the charging and discharging operations. Since the difference between Example No. 1 and Example No. 5 was whether the composite oxide underwent the calcination or not after it was synthesized, it was understood that the composite oxide onto which the calcination had been performed upgraded greatly in the cyclability.

## Claims

1. A production process for composite oxide being **characterized in that**:

    it is a production process for composite oxide whose major component is a lithium-manganese-system oxide that at least includes: a lithium (Li) element; and a tetravalent manganese (Mn) element, and whose crystal structure belongs to a layered rock-salt structure;
    said composite oxide is obtained via the following:

       a raw-material mixture preparation step of preparing a raw-material mixture by mixing a metallic-compound raw material and a molten-salt raw material with each other,
       the metallic-compound raw material at least including one or more kinds of metallic compounds being selected from the group consisting of oxides, hydroxides and metallic salts that include one or more kinds of metallic elements in which Mn is essential,
       the molten-salt raw material including lithium hydroxide and lithium nitrate, and exhibiting a proportion of the lithium hydroxide with respect to the lithium nitrate (i.e., (Lithium Hydroxide)/(Lithium Nitrate)) that falls in a range of from 1 or more to 10 or less by molar ratio;
       a molten reaction step of reacting said raw-material mixture at a melting point of said molten-salt raw material or more by melting it: and
       a recovery step of recovering said composite oxide being generated from said raw-material mixture that has undergone the reaction.

2. The production process for composite oxide as set forth in claim 1, wherein said molten reaction step is a step of reacting said raw-material mixture at 330°C or more.

3. The production process for composite oxide as set forth in claim 1 or 2, wherein said molten-salt raw material does not include any lithium peroxide.

4. The production process for composite oxide as set forth in any of claims 1 through 3, wherein said metallic-compound raw material further includes one or more kinds of second metallic compounds being selected from the group consisting of oxides, hydroxides and metallic salts that include one or more kinds of metallic elements other than Mn.

5. The production process for composite oxide, wherein a precursor synthesis step, in which an aqueous solution including at least two kinds of metallic elements is alkalified in order to obtain precipitates, is further carried out before the raw-material mixture preparation step in the production process for composite oxide as set forth in any of claims 1 through 4, and then said precipitates are employed as said metallic compounds and/or said second metallic compounds at the mixture preparation step.

6. The production process for composite oxide as set forth in any of claims 1 through 5, wherein said raw-material mixture exhibits a proportion of the metallic elements, which are included in said metallic-compound raw material, with respect to lithium, which is included in said molten-salt raw material, (i.e., (Metallic Elements in Metallic-compound Raw Material)/(Li in Molten-salt Raw Material)), the proportion falling in a range of from 0.01 or more to 0.2 or less by molar ratio.

7. The production process for composite oxide as set forth in any of claims 1 through 6, wherein said molten-salt raw material exhibits a proportion of lithium hydroxide with respect to lithium nitrate (i.e., (Lithium Hydroxide)/(Lithium Nitrate)), the proportion falling in a range of from more than 1 to 5 or less by molar ratio.

8. The production process for composite oxide as set forth in any of claims 1 through 7, wherein said molten reaction step is carried out in an oxygen-containing atmosphere.

9. The production process for composite oxide being **characterized in that** a heat-calcination treatment step, in which said composite oxide is heated in an oxygen-containing atmosphere, is further carried out after the recovery step in the production process for composite oxide as set forth in any of claims 1 through 8.

10. A positive-electrode active material for lithium-ion secondary battery being **characterized in that** it includes the composite oxide that has been obtained by means of the production process for composite oxide as set forth in any of claims 1 through 9.

11. The positive-electrode active material for lithium-ion secondary battery as set forth in claim 10, wherein said composite oxide includes single-crystalline primary particles whose c-axis-direction particle diameters being calculated by means of the Scherrer equation are 100 nm or less.

12. The positive-electrode active material for lithium-ion secondary battery as set forth in claim 10 or 11, wherein said lithium manganese oxide is expressed by a compositional formula: $Li_{1.33-y}M^1_{0.67-z}M^2_{y+z}O_2$ (where "M$^1$" is one or more kinds of metallic elements in which tetravalent Mn is essential; "M$^2$" is one or more kinds of metallic elements; $0 \leqq$ "y" $\leqq 0.33$; $0 \leqq$ "Z" $\leqq 0.67$; and Li may even be substituted by hydrogen in a part thereof).

13. The positive-electrode active material for lithium-ion secondary battery as set forth in claim 10 or 11, wherein said lithium-manganese-system oxide is expressed by a compositional formula: $xLi_2M^1O_3 \cdot (1-x)LiM^2O_2$ (where "M$^1$" is one or more kinds of metallic elements in which tetravalent Mn is essential; "M$^2$" is one or more kinds of metallic elements; $0 \leqq$ "x" $\leqq 1$; and Li may even be substituted by hydrogen in a part thereof).

14. A positive-electrode active material for lithium-ion secondary battery being **characterized in that** it is expressed by a compositional formula: $Li_{1.33}-yM^1_{0.67-z}M^2_{y+z}O_2$ (where "M$^1$" is one or more kinds of metallic elements in which tetravalent Mn is essential; "M$^2$" is one or more kinds of metallic elements; $0 \leqq$ "y" $\leqq 0.33$; $0 \leqq$ "Z" $\leqq 0.67$; and Li may even be substituted by hydrogen in a part thereof) ; it includes single-crystalline primary particles whose c-axis-direction particle diameters being calculated by means of the Scherrer equation are 100 nm or less; and it has a layered rock-salt structure.

15. A positive-electrode active material for lithium-ion secondary battery being **characterized in that** it is expressed by a compositional formula: $xLi_2M^1O_3 \cdot (1-x)LiM^2O_2$ (where "M$^1$" is one or more kinds of metallic elements in which tetravalent Mn is essential; "M$^2$" is one or more kinds of metallic elements; $0 \leqq$ "x" $\leqq 1$; and Li may even be substituted by hydrogen in a part thereof); it includes single-crystalline primaryparticleswhosec-axis-direction particle diameters being calculated by means of the Scherrer equation are 100 nm or less; and it has a layered rock-salt structure.

16. Thepositive-electrodeactivematerialforlithium-ion secondary battery as set forth in claims 10 through 15 having an $\alpha$-NaFeO$_2$ type layered rock-salt structure.

17. A lithium-ion secondary battery being **characterized in that** it is equipped with:

> a positive electrode including the positive-electrode active material for lithium-ion secondary battery as set forth in any of claims 10 through 16;
> a negative electrode; and
> a non-aqueous electrolyte.

18. A vehicle being **characterized in that** it has the lithium-ion secondary battery as set forth in claim 17 on-board.

*Fig.1*

*Fig.2*

## Fig.3

## Fig.4

## INTERNATIONAL SEARCH REPORT

| | International application No. |
|---|---|
| | PCT/JP2010/073654 |

A.  CLASSIFICATION OF SUBJECT MATTER
*C01G45/00*(2006.01)i, *C01G51/00*(2006.01)i, *C01G53/00*(2006.01)i, *H01M4/505*
(2010.01)i

According to International Patent Classification (IPC) or to both national classification and IPC

B.  FIELDS SEARCHED

Minimum documentation searched (classification system followed by classification symbols)
C01G1/00-99/00, H01M4/00-4/98

Documentation searched other than minimum documentation to the extent that such documents are included in the fields searched
Jitsuyo Shinan Koho          1922-1996   Jitsuyo Shinan Toroku Koho   1996-2011
Kokai Jitsuyo Shinan Koho    1971-2011   Toroku Jitsuyo Shinan Koho   1994-2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>A | JP 2003-048718 A  (National Institute of Advanced Industrial Science and Technology), 21 February 2003 (21.02.2003), claims 1, 5, 6; paragraphs [0001], [0002], [0012], [0029], [0031]; examples; fig. 2 (Family: none) | 14-18<br>1-13 |
| A | JP 2008-207997 A  (Tokyo Institute of Technology), 11 September 2008 (11.09.2008), entire text & US 2008/0206644 A1 | 1-18 |
| A | JP 2009-152114 A  (GS Yuasa Corp.), 09 July 2009 (09.07.2009), entire text & WO 2009/063838 A1 | 1-18 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 February, 2011 (14.02.11) | 22 February, 2011 (22.02.11) |

| Name and mailing address of the ISA/<br>   Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2010/073654

C (Continuation).    DOCUMENTS CONSIDERED TO BE RELEVANT

| Category* | Citation of document, with indication, where appropriate, of the relevant passages | Relevant to claim No. |
|---|---|---|
| A | JP 10-330118 A  (Showa Denko Kabushiki Kaisha), 15 December 1998 (15.12.1998), entire text & US 6117410 A | 1-18 |
| A | JP 2001-192210 A  (Seimi Chemical Co., Ltd.), 17 July 2001 (17.07.2001), entire text (Family: none) | 1-18 |
| A | JP 2001-302244 A  (Toyota Central Research and Development Laboratories, Inc.), 31 October 2001 (31.10.2001), entire text (Family: none) | 1-18 |
| A | JP 2008-270201 A  (Kanagawa University), 06 November 2008 (06.11.2008), entire text (Family: none) | 1-18 |
| A | JP 2008-105912 A  (National Institute of Advanced Industrial Science and Technology), 08 May 2008 (08.05.2008), entire text (Family: none) | 1-18 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008270201 A
- JP 2008105912 A